# EUROPÄISCHE PATENTANMELDUNG

(11) **EP 1 970 326 A2**
(43) Veröffentlichungstag der Anmeldung: **17.09.2008**
(21) Anmeldenummer: 08405024.4
(22) Anmeldetag: 28.01.2008
(51) Int. Cl.: B65G 1/02, B65G 1/04

(54) **Regallageranlage mit Sicherheitsanordnung, Sicherheitsanordnung für Regallageranlagen sowie Verfahren zur Steuerung eines Regalbediengeräts einer Regallageranlage**

(30) Priorität: 15.03.2007 CH 4152007
(71) Anmelder: Dreier Solutions GmbH, 4245 Kleinlützel (CH)
(72) Erfinder: Dreier, Erich, 4245 Kleinlützel (CH)
(74) Vertreter: Rottmann, Maximilian

(57) **Zusammenfassung**

Die Regallageranlage (1) zur Aufnahme von Gütern ist mit in Regalreihen (3a) angeordneten Regalfächern (2) und zwischen den Regalreihen (3a) verlaufenden Gassen (5) versehen. In diesen Gassen (5) verkehren flurfrei arbeitende Regalbediengeräte (10), die mit einer Steuerungsvorrichtung (32) zur Steuerung ihrer Bewegung verbunden sind. Das jeweilige Regalbediengerät (10) weist eine horizontal verfahrbare Verfahreinheit (12) auf, an welcher ein vertikal verfahrbares Lastaufnahmemittel (14) aufgehängt ist. Die Regallageranlage (1) ist mit einer Sicherheitsanordnung (20) versehen, mittels welcher sich im Bewegungsbereich des jeweiligen Regalbediengeräts (14), insbesondere des jeweiligen Lastaufnahmemittels (14) befindliche Objekte, insbesondere Personen oder Körperteile, erkennbar sind. Die Sicherheitsanordnung (20) umfasst zumindest eine am Lastaufnahmemittel (14) des jeweiligen Regalbediengeräts angeordnete, opto-elektronische Sicherheitsvorrichtung (21) zur Überwachung eines Bereichs oder mehrerer Bereiche (24, 25) unterhalb und/oder seitlich des Lastaufnahmemittels (14). Vorzugsweise umfasst die Sicherheitsanordnung (20) zusätzlich zumindest eine im Bereich des Bodens der jeweiligen Gasse (5) angeordnete, opto-elektronische Sicherheitsvorrichtung (28) zur Überwachung einer zumindest annähernd horizontal verlaufenden Fläche oberhalb des Bodens der Gasse (5). Die opto-elektronischen Sicherheitsvorrichtungen (21, 28) sind derart mit der Steuerungsvorrichtung (32) verbunden, dass die Bewegung oder der Bewegungsablauf des jeweiligen Regalbediengeräts (10) beeinflussbar ist, wenn ein Objekt in den Bereich der überwachten Fläche gelangt.

## Beschreibung

Die Erfindung betrifft eine Regallageranlage nach dem Oberbegriff des Anspruchs 1, eine Sicherheitsanordnung für Regallageranlagen nach dem Oberbegriff des Anspruchs 10 sowie ein Verfahren zur Steuerung eines Regalbediengeräts einer Regallageranlage nach dem Oberbegriff des Anspruchs 16.

Aus der EP-A-1 136 395 ist ein System zum Kommissionieren von in Regallagern befindlichen Artikeln bekannt. Das System umfasst eine Mehrzahl paralleler Regalreihen zum Einlagern von palettierten Artikeln. Zwischen den Regalreihen sind abwechselnd Einlager-Gassen und Pick-Gassen angeordnet. Zwei solcher Regalreihen bilden ein Modul, wobei zwischen den beiden Regalreihen eines Moduls jeweils eine Einlager-Gasse mit mindestens einem Einlager-Fahrzeug angeordnet ist. In jeder Pick-Gasse ist mindestens ein Picker-Fahrzeug zum Picken der zu kommissionierenden Artikel angeordnet. Das Picker Fahrzeug wird von einer Person bedient, welche sich in den Picker Gassen bewegen und die Regalreihen betreten kann. Das jeweilige Einlager-Fahrzeug ist als flurgebundenes Regalbediengerät ausgebildet, während das jeweilige Picker-Fahrzeug auf Schienen verfahrbar ist. In den Regelreihen sind Pufferbahnen ausgebildet, welche die Übergabe einer Palette von der einen Regalreihe in die unmittelbar benachbarte Regalreihe ermöglichen. Um eine Palette von der einen Regalreihe an die benachbarte Regalreihe zu übergeben, muss die Palette von einem Picker-Fahrzeug in eine Pufferbahn eingeschoben werden, wo sie vom Regalbediengerät übernommen und danach in die in der anderen Regalreihe ausgebildete Pufferbahn übergeben wird. Danach kann die Palette von dem gegenüberliegenden Picker-Fahrzeug übernommen werden.

Eine grundsätzliche Problematik bei Regallageranlagen in denen sich Personen aufhalten und bewegen können besteht darin, dass die Personen durch die sich in den der jeweiligen Gasse bewegenden Regalbediengeräte oder deren Lastaufnahmemittel verletzt werden können, wenn sie in den Bereich einer solchen Gasse gelangen. Diese Problematik tritt in verschärfter Form bei Kommissionieranlagen auf, in denen sich Personen in den sogenannten Kommissionierebenen frei bewegen können. Wenn beispielsweise eine Person einen Lagerplatz betritt, um darin aufgenommene Güter manuell zu entnehmen, so besteht die Gefahr, dass sie mit Körperteilen in den Bewegungsbereich eines Regalbediengeräts gelangt und von einem sich vorbeibewegenden Regalbediengerät verletzt wird.

Um dies zu verhindern sind Regallageranlagen bekannt, bei denen der jeweilige Lagerplatz auf der der Gasse zugewandten Seite mit einem Hubtor oder einem Schiebetor versehen ist. Diese Tore sind im Normalfall geschlossen, so dass keine Personen durch den jeweiligen Lagerplatz hindurch in den Bereich der Gasse und damit in den Bewegungsbereich der Regalbediengeräte gelangen kann. Bevor jedoch ein Regalbediengerät Paletten in einen Lagerplatz ein- oder auslagern kann, muss zuerst das entsprechende Tor geöffnet und nach dem Einlagern bzw. der Entnahme der Palette auch wieder geschlossen werden. Dieses Öffnen und Schliessen des Tores erfolgt im Allgemeinen durch das Regalbediengerät, welches dazu mit entsprechenden Einrichtungen versehen ist. Es versteht sich, dass das Vorsehen solcher Tore sehr teuer und aufwendig ist und zudem für das Öffnen und Schliessen des jeweiligen Tores vergleichsweise viel Zeit benötigt wird, in der das jeweilige Regalbediengerät blockiert ist.

Im weiteren ist aus der DE-A-102 50 964 ein System zum dynamischen Bereitstellen und Kommissionieren, insbesondere von Paletten und anderen Lagereinheiten, bekannt. Dieses System umfasst einen Lagerbereich, der aus einer Vielzahl von Lagerscheiben besteht. Die Lagerscheiben sind in Regalfächer unterteilt, wobei pro Regalfach drei mit Gütern bestückte Lagereinheiten aufgenommen werden können. Zwischen zwei Regalscheiben verläuft jeweils eine Gasse. Am Boden der jeweiligen Gasse sind flurgebundene, fahrerlose Transportfahrzeuge angeordnet, die entlang von entsprechenden Spuren verkehren können. Im Bereich der obersten Regalfächer einer Lagerscheibe sind flurlose Lagerbediengeräte angeordnet, die entlang den Gassen verfahrbar sind. Das jeweilige Lagerbediengerät besteht aus einer Verfahreinheit und einem über Seile damit verbundenen Lastaufnahmemittel, welches vertikal verfahrbar ist. Obwohl ein derartiges System gegenüber flurgebundenen Regalbediengeräten wesentlich Vorteile aufweist, besteht auch hier die Gefahr, dass sich in den Gassen aufhaltende Personen durch die flurgebundenen Transportfahrzeuge bzw. die nicht flurgebundenen Lagerbediengeräte verletzt werden können.

Die Erfindung zielt darauf ab, eine gemäss dem Oberbegriff des Anspruchs 1 ausgebildeten Regallageranlage derart weiterzubilden, dass sie eine hohe Betriebssicherheit bietet, indem einerseits Objekte, insbesondere Personen oder Körperteile, erkannt werden, welche sich im Bewegungsbereich des jeweiligen Regalbediengeräts befinden und indem andererseits nach dem Erkennen eines Objekts die für einen sicheren Betrieb der Regallageranlage geeigneten Massnahmen getroffen werden, wobei die Sicherheitsanordnung einfach und kostengünstig realisierbar sein soll und keine nennenswerten Nachteile in Bezug auf die Einlager- bzw. Auslagergeschwindigkeit von Gütern mit sich bringen soll.

Hierzu wird nach der Erfindung eine Regallageranlage gemäss dem Anspruch 1 bereitgestellt.

Bevorzugte Ausführungsbeispiele der Regallageranlage sind in den abhängigen Ansprüchen 2 bis 10 umschrieben.

Eine weitere Aufgabe der Erfindung besteht darin, eine Sicherheitsanordnung für Regallageranlagen nach dem Oberbegriff des Anspruchs 10 vorzuschlagen, mit welcher zuverlässig verhindert werden soll, dass keine Objekte, insbesondere keine Personen durch ein Regalbediengerät bzw. dessen Lastaufnahmemittel verletzt werden.

Bevorzugte Weiterbildungen der Sicherheitsanordnung sind in den abhängigen Ansprüchen 12 bis 15 umschrieben.

Schliesslich besteht eine weitere Aufgabe der Erfindung darin, ein Verfahren zur Steuerung eines Regalbediengeräts einer Regallageranlage nach dem Oberbegriff des Anspruchs 16 vorzuschlagen, welches die Verletzungsgefahr für in den Bewegungsbereich eines Regalbediengeräts gelangende Objekte, insbesondere Personen, minimiert bzw. ausschaltet.

Zur Lösung dieser Aufgabe wird ein Verfahren vorgeschlagen, das die im Kennzeichen des Anspruchs 16 definierten Verfahrensschritte beinhaltet.

Bevorzugte Weiterbildungen des Verfahrens sind in den abhängigen Ansprüchen 17 bis 19 umschrieben.

Nachfolgend wird ein bevorzugtes Ausführungsbeispiel der Erfindung anhand von Zeichnungen näher erläutert. In diesen Zeichnungen zeigt:
- Fig. 1: einen Querschnitt durch eine nach dem Stand der Technik ausgebildete Regallageranlage;
- Fig. 2: einen Ausschnitt einer erfindungsgemäss ausgebildeten Regallageranlage in perspektivischer Darstellung;

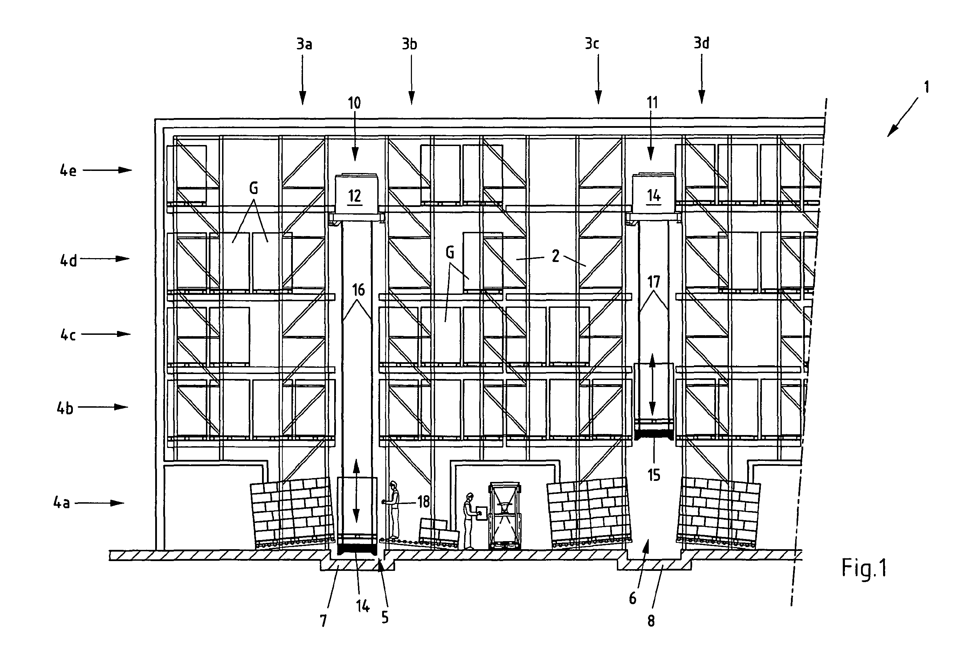

Die Fig. 1 zeigt schematisch einen Ausschnitt einer nach dem Stand der Technik ausgebildeten Regallageranlage 1 im Querschnitt. Die Regallageranlage 1 weist eine Vielzahl von Regalfächern 2 auf, die in vertikal verlaufenden Regalreihen 3a-3d angeordnet sind. Die Regallageranlage 1 besteht aus mehreren vertikal übereinander angeordneten Ebenen 4a-4e, wobei die unterste Ebene 4a als sogenannte Kommissionierbene ausgebildet ist, während die vier darüber liegenden Ebenen 4b-4e als Lagerebenen dienen. Ein einzelnes Regalfach 2 kann ggf. mehrere horizontal nebeneinander angeordnete Lagerplätze umfassen, wobei der jeweilige Lagerplatz in der Form eines Lagerkanals ausgebildet sein kann, der mehrere hintereinander angeordnete Stellplätze umfasst. Das jeweilige Regalfach 2 dient der Aufnahme von Gütern G, die vorzugsweise auf Paletten aufgenommen sind. Zwischen zwei benachbarten Regalreihen 3a, 3b bzw. 3c, 3d verläuft jeweils eine Gasse 5, 6 welche sich in vertikaler Richtung über sämtliche Ebenen 4a-4e hin erstreckt. Pro Gasse 5, 6 ist zumindest ein in Längsrichtung der Gasse 5, 6 verfahrbares Regalbediengerät 10, 11 angeordnet, welches hier nur schematisch angedeutet ist.

Das jeweilige Regalbediengerät 10, 11 ist als flurfrei arbeitendes Gerät ausgebildet, das oberhalb des Bodens 7, 8 der jeweiligen Gasse 5, 6 vorzugsweise im Bereich der obersten oder zweitobersten Ebene 4d, 4e, verfahrbar abgestützt ist. Pro Gasse 5, 6 muss zumindest ein Regalbediengerät 10, 11 so weit oben angeordnet sein, dass es Paletten aus den in der obersten Ebene 4e angeordneten Regalfächern 2 entnehmen bzw. darin einlagern kann. Das jeweilige Regalbediengerät 10, 11 umfasst eine elektromotorisch angetriebene Verfahreinheit in der Form einer Laufkatze 12, 13 sowie ein Lastaufnahmemittel 14, 15, weiches mittels Seilen 16, 17 oder dergleichen an der Laufkatze 12, 13 aufgehängt ist. Obwohl aus dieser Darstellung nur zwei Seile pro Regalbediengerät 10, 11 ersichtlich sind, ist das jeweilige Lastaufnahmemittel 14, 15 mittels vier Seilen mit der Laufkatze 12, 13 verbunden. Es versteht sich, dass anstelle von Seilen auch andersartige Tragmittel wie beispielsweise Riemen vorgesehen werden können. Das jeweilige Lastaufnahmemittel 14, 15 ist, wie durch Doppelpfeile angedeutet, in vertikaler Richtung entlang der Regalreihen 3a, 3b, bzw. 3c, 3d verfahrbar. Das Lastaufnahmemittel 14, 15 ist vorzugsweise als Plattform ausgebildet, auf der eine Ein-/Auslagervorrichtung in Form einer Hub-Teleskopgabel oder eines Kanalfahrzeugs angeordnet ist, mittels welchem die Güter G aus einem Regalfach 2 entnommen bzw. darin eingelagert werden können. Um Güter G in ein Regalfach 2 ein- bzw. auslagern zu können, muss die jeweilige Ein-/Auslagervorrichtung positionsgenau vor dem jeweiligen Regalfach bzw. dem jeweiligen Lagerplatz platziert werden.

Eine grundsätzliche Problematik bei einer derartigen Regallageranlage besteht darin, dass Objekte, insbesondere Personen oder deren Körperteile bzw. Gliedmassen, in den Bewegungsbereich des jeweiligen Regalbediengeräts 10, 11, namentlich des Lastaufnahmemittels 14, 15, gelangen können. Diese Gefahr ist insbesondere bei Regallageranlagen 1 mit Kommissionierebenen 4a sehr gross, da eine Personen 18, wie angedeutet, über ein zumindest teilweise leeres Regalfach 2a in eine Gasse 5 und damit in den Bewegungsbereich des Regalbediengeräts 10 gelangen kann.

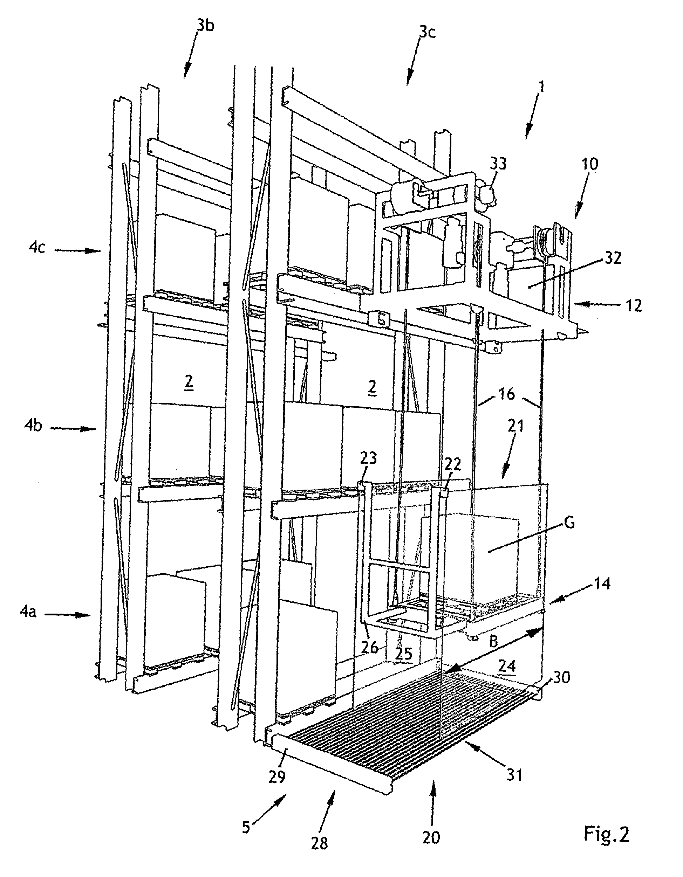

In der Fig. 2 ist ein Ausschnitt einer erfindungsgemäss ausgebildeten Regallageranlage 1 in perspektivischer Darstellung ersichtlich, mit welcher die vorgängig angesprochene Problematik in besonders vorteilhafter Weise gelöst werden kann, wobei die Fig. 2 lediglich ein mögliches Ausführungsbeispiel zeigt, welches nicht als abschliessend oder umfassend anzusehen ist.

Die Regallageranlage 1 ist mit einer gesamthaft mit 20 bezeichneten Sicherheitsanordnung versehen, welche aus mehreren Elementen besteht. Die Sicherheitsanordnung 20 umfasst eine erste, am Lastaufnahmemittel 14 angeordnete opto-elektronische Sicherheitsvorrichtung 21 sowie eine zweite, am Boden der Gasse 5 angeordnete opto-elektronische Sicherheitsvorrichtung 28. Ein weiterer Teil der Sicherheitsanordnung 20 besteht aus Soft- und/oder Hardwarekomponenten. Im vorliegenden Beispiel bilden diese Soft- und/oder Hardwarekomponenten einen Teil einer zur Steuerung des Bewegungsablaufs des jeweiligen Regalbediengeräts 10 vorgesehenen Steuerungsvorrichtung 32, welche an der Verfahreinheit 12 des Regalbediengeräts 10 angebracht ist.

Unter opto-elektronischen Sicherheitsvorrichtungen werden berührungslos wirkende Schutzvorrichtungen verstanden, die aus einem Sender, einem Empfänger und gewöhnlich noch einem Sicherheitsbaustein bestehen. Je nach Bauform werden solche Vorrichtungen als einfache Lichtschranken, mehrfache Lichtschranken bezeichnet, welche Lichtvorhänge oder Lichtgitter emittieren, wobei zusätzlich auch noch Laserscanner bekannt sind. Während bei einer Lichtschranke der Sender vom Empfänger örtlich getrennt ist, sind bei einem Laserscanner der Sender und der Empfänger nahe beieinander angeordnet, eventuell sogar im gleichen Gehäuse aufgenommen. So wird bei den erstgenannten Typen der Unterbruch des Lichtstrahls erkannt, während bei Laserscannern die Reflektion des emittierten Lichtstrahls von einem sich in einem bestimmten Abstand befindlichen Objekt erkannt wird, indem der Laserstrahl von dem Objekt im Scanbereich diffus reflektiert und mittels der im Laserscanner integrierten Empfängereinheit empfangen wird. Je nach Ausführung kann mit einem Laserscanner auch der Abstand zwischen dem detektierten Objekt und dem Empfänger berechnet werden.

Die erste opto-elektronische Sicherheitsvorrichtung 21 besteht aus zwei Laserscannern 22, 23, welche mittels eines Haltebügels 26 an dem Lastaufnahmemittel 14 befestigt sind. Die Befestigungshöhe des jeweiligen Laserscanners 22, 23 ist so gewählt, dass er sich oberhalb der Oberseite von auf dem Lastaufnahmemittel 14 aufnehmbaren Gütern G befindet. Mit jedem dieser Laserscanner 22, 23 wird ein Bereich 24, 25 abgetastet, der im Wesentlichen aus einer vertikal verlaufenden Fläche besteht, die sich von dem jeweiligen Laserscanner 22, 23 ausgehend seitlich des Lastaufnahmemittels 14 vertikal nach unten erstreckt, wobei die Breite B des jeweiligen Bereichs 24 so gewählt ist, dass er sich zumindest entlang des gesamten Lastaufnahmemittels 14 erstreckt.

Die zweite opto-elektronische Sicherheitsvorrichtung 28 besteht aus einer länglichen Sendeeinheit 29, sowie einer länglichen Empfangseinheit 30, welche jeweils oberhalb des Bodens quer zur Längsachse der jeweiligen Gasse 5 angebracht sind. Die Sendeeinheit 29 emittiert einen aus einer Vielzahl von einzelnen Lichtstrahlen bestehenden Lichtvorhang 31 in Richtung der Empfangseinheit 30. Der Lichtvorhang verläuft parallel zum Boden der Gasse 5. Es versteht sich, dass bei sehr langen Gassen mehrere solcher opto-elektronischen Sicherheitsvorrichtungen 26 hintereinander angeordnet werden können. Sowohl die erste wie auch die zweite opto-elektronische Sicherheitsvorrichtung 21, 28 sind mit der Steuerungsvorrichtung 32 verbunden. Die Steuerungsvorrichtung 32 dient dem Steuern des Bewegungsablaufs des jeweiligen Regalbediengeräts 10, namentlich zum Einlagern von Gütern in ein Regalfach bzw. zum Auslagern von Gütern aus einem Regalfach heraus. Dazu muss die Steuerungsvorrichtung 32 sowohl die Horizontalbewegung der Laufkatze 12 wie auch das vertikale Verfahren, anheben bzw. absenken, des Lastaufnahmemittels 14 koordinieren. Die Steuerungsvorrichtung 32 ist derart ausgelegt, dass die Laufkatze 12 nur dann in horizontaler Richtung bewegt werden kann, wenn sich das Lastaufnahmemittel 14 oberhalb der untersten Ebene - Kommissionierebene 4a-, also ca. 2.5 bis 3 Meter über dem Boden der jeweiligen Gasse 5 befindet. Vorzugsweise sind die beiden Laserscanner 22, 23 nur aktiv, wenn sich das Lastaufnahmemittel 14 im Bereich der untersten Ebene 4a befindet. Sobald sich das Lastaufnahmemittel 14 in vertikaler Richtung im Bereich der Kommissionierebene 4a befindet, wird die horizontale Verfahrbarkeit der Laufkatze 12 unterbunden. Dadurch soll sichergestellt werden, dass das Lastaufnahmemittel 14 in dem Bereich, in dem sich Personen grundsätzlich aufhalten können, nur in vertikaler Richtung bewegt werden kann. Jedenfalls müssen Mittel zum Erfassen der vertikalen Position des Lastaufnahmemittels 14 vorgesehen werden, damit erkannt wird, wann sich das Lastaufnahmemittels 14 im Bereich der Kommissionierebene befindet und ab wann die erste opto-elektronische Sicherheitsvorrichtung 21 spätestens aktiviert sein muss. Das Erfassen der vertikalen Position des Lastaufnahmemittels 14 kann beispielsweise über einen Drehgeber 33 erfolgen, der an einer der Antriebsachsen der Laufkatze 12 angeordnet ist, welche zum Auf- und Abwickeln der Tragseile 16 vorgesehen sind.

Die Steuerungsvorrichtung 32 steht mit den opto-elektronischen Sicherheitsvorrichtungen 21, 28 derart in Wirkverbindung, dass eine allfällige Bewegung des Regalbediengeräts 10 gestoppt wird, sobald ein Objekt mittels der oberhalb des Bodens angeordneten opto-elektronischen Sicherheitsvorrichtung 28 detektiert wird. Wenn eine Person in die Gasse 5 eintritt, wird der Lichtvorhang 31 stellenweise unterbrochen und eine allfällige horizontale Bewegung der Laufkatze 12 wie auch eine allfällige vertikale Bewegung des Lastaufnahmemittels 14 gestoppt. Wenn mit einem der Laserscanner 22, 23 ein Objekt erkannt wird, wird die vertikale Bewegung des Lastaufnahmemittels 14 gestoppt. Da mit dem jeweiligen Laserscanner 22, 23 auch der Abstand zwischen dem detektierten Objekt und dem Empfänger berechnet werden kann, kann diese Zusatzinformation beispielsweise dazu genutzt werden, um das Mass der Verzögerung von der Distanz zwischen dem detektierten Objekt und dem Lastaufnahmemittel 14 beim Abbremsen der Vertikalbewegung des Lastaufnahmemittels 14 abhängig zu machen. Das heisst mit anderen Worten, wenn sich ein mittels eines Laserscanners 22, 23 im Bewegungsbereich des Lastaufnahmemittels 14 detektiertes Objekt noch in einer sicheren Entfernung zu dem Lastaufnahmemittel 14 befindet, wird das Lastaufnahmemittel 14 langsam abgebremst. Wenn sich jedoch das Lastaufnahmemittel 14 schon sehr nahe an dem detektierten Objekt befindet, wird Lastaufnahmemittel 14 sehr schnell abgebremst, ggf. sogar ein Notstop ausgelöst, indem mit maximal möglicher Verzögerung abgebremst wird.

Indem die beiden am Lastaufnahmemittel 14 angeordneten Laserscanner 22, 23 auch den Bereich oberhalb der eigentlichen Lastaufnahmeplattform abtasten, kann verhindert werden, dass beim Hochfahren des Lastaufnahmemittels 14 keine Objekte wie beispielsweise Gliedmassen zwischen dem Lastaufnahmemittel und Teilen der Tragstruktur der Regallageranlage 1 oder der Decke der Kommissionierebene eingeklemmt werden können.

## Patentansprüche

1. Regallageranlage (1) mit in Regalreihen (3a-3d) angeordneten Regalfächern (2) und zwischen den Regalreihen (3) verlaufenden Gassen (5, 6), in welchen flurfrei arbeitende Regalbediengeräte (10, 11) verkehren, die mit einer Steuerungsvorrichtung (32) zur Steuerung ihrer Bewegung verbunden sind und eine horizontal verfahrbare Verfahreinheit (12, 13) aufweisen, an welcher ein vertikal verfahrbares Lastaufnahmemittel (14, 15) aufgehängt ist, **dadurch gekennzeichnet, dass** die Regallageranlage (1) mit einer Sicherheitsanordnung (20) versehen ist, mittels welcher sich im Bewegungsbereich des jeweiligen Regalbediengeräts (14), insbesondere des jeweiligen Lastaufnahmemittels (14) befindliche Objekte, insbesondere Personen oder Körperteile, erkennbar sind, wobei die Sicherheitsanordnung (20) zumindest eine am Lastaufnahmemittel (14) des jeweiligen Regalbediengeräts angeordnete, opto-elektronische Sicherheitsvorrichtung (21) zur Überwachung eines Bereichs oder mehrerer Bereiche (24, 25) unterhalb und/oder seitlich des Lastaufnahmemittels (14) umfasst, und wobei die opto-elektronische Sicherheitsvorrichtung (20) derart mit der Steuerungsvorrichtung (32) in Verbindung steht, dass die Bewegung oder der Bewegungsablauf des jeweiligen Regalbediengeräts (10) beeinflussbar ist, wenn ein Objekt in den überwachten Bereich gelangt.

2. Regallageranlage (1) nach Anspruch 1, **dadurch gekennzeichnet, dass** sich die die jeweilige Gasse seitlich begrenzenden Regalreihen (3b 3c) in vertikaler Richtung über mehrere Ebenen (4a-4c) erstrecken, wobei die Steuerungsvorrichtung (32) das jeweilige Regalbediengerät (12) derart steuert, dass die horizontale Verfahrbarkeit der Verfahrenheit (12) unterbunden ist, sobald sich das Lastaufnahmemittel (14) im Bereich der untersten Ebene (4a) befindet.

3. Regallageranlage (1) nach Anspruch 2, **dadurch gekennzeichnet, dass** die unterste Ebene (4a) als Kommissionierebene ausgebildet ist.

4. Regallageranlage (1) nach einem der vorhergehenden Ansprüche, **dadurch gekennzeichnet, dass** die Sicherheitsanordnung (20) zusätzlich zumindest eine im Bereich des Bodens der jeweiligen Gasse (5) angeordnete, opto-elektronische Sicherheitsvorrichtung (28) zur Überwachung einer zumindest annähernd horizontal verlaufenden Fläche oberhalb des Bodens der Gasse (5) aufweist, welche derart mit der Steuerungsvorrichtung (32) in Verbindung steht, dass die Bewegung oder der Bewegungsablauf des jeweiligen Regalbediengeräts (10) beeinflussbar ist, wenn ein Objekt in den Bereich der überwachten Fläche gelangt.

5. Regallageranlage (1) nach einem der vorhergehenden Ansprüche, **dadurch gekennzeichnet, dass** am jeweiligen Lastaufnahmemittel (14) an beiden einer Regalreihe zugewandten Längsseiten je eine opto-elektronische Sicherheitsvorrichtung (22, 23) angebracht ist, mittels welcher je eine zumindest annähernd parallel zur jeweiligen Regalreihe verlaufende, sich im Wesentlichen in vertikaler Richtung erstreckende Fläche (24, 25) überwachbar ist.

6. Regallageranlage (1) nach einem der vorhergehenden Ansprüche, **dadurch gekennzeichnet, dass** die jeweilige, am Lastaufnahmemittel (14) angebrachte opto-elektronische Sicherheitsvorrichtung (22, 23) als Laserscanner ausgebildet ist, welche mit einer in einem Gehäuse angeordneten Sende- und Empfangseinheit versehen ist.

7. Regallageranlage (1) nach einem der vorhergehenden Ansprüche, **dadurch gekennzeichnet, dass** die jeweilige, im Bereich des Bodens einer Gasse (5) angebrachte opto-elektronische Sicherheitsvorrichtung (21) aus einer länglichen Sendeeinheit (29) und einer länglichen Empfangseinheit (30) besteht, welche jeweils oberhalb des Bodens quer zur Längsachse der Gasse (5) angebracht sind.

8. Regallageranlage (1) nach Anspruch 7, **dadurch gekennzeichnet, dass** die Sendeeinheit (29) eine Vielzahl von Lichtstrahlen in Form eines Lichtvorhangs (31) in Richtung der Empfangseinheit (30) emittiert, wobei die Lichtstrahlen (31) im wesentlichen parallel zur Längsachse der Gasse (5) verlaufen.

9. Regallageranlage (1) nach einem der vorhergehenden Ansprüche, **dadurch gekennzeichnet, dass** das jeweilige Regalbediengerät (10) eine horizontal verfahrbare Verfahreinheit (12) und ein über Seile (16) oder Riemen damit verbundenes, vertikal verfahrbares Lastaufnahmemittel (14) aufweist.

10. Sicherheitsanordnung (20) für Regallageranlagen (1), die mit in Regalreihen (3b, 3c) angeordneten Regalfächern (2) und dazwischen verlaufenden Gassen (5) versehen sind, in welchen flurfrei arbeitende Regalbediengeräte (10) verkehren, die mit einer Steuerungsvorrichtung (32) zur Steuerung ihrer Bewegung verbunden sind, wobei das jeweilige Regalbediengerät (10) eine horizontal verfahrbare Verfahreinheit (12) aufweist, an der ein vertikal verfahrbares Lastaufnahmemittel (14) aufgehängt ist, **dadurch gekennzeichnet, dass** die Sicherheitsanordnung (20) zumindest eine am Lastaufnahmemittel (14) des jeweiligen Regalbediengeräts (10) angeordnete, opto-elektronische Sicherheitsvorrichtung (21) zur Überwachung eines Bereichs unterhalb und/oder seitlich des Lastaufnahmemittels (14) umfasst, welche derart mit der Steuerungsvorrichtung (32) verbunden ist, dass die Bewegung oder der Bewegungsablauf des jeweiligen Regalbediengeräts (10) beeinflussbar ist, wenn ein Objekt in den Bereich der überwachten Fläche (24, 25) gelangt.

11. Sicherheitsanordnung (20) nach Anspruch 10, **dadurch gekennzeichnet, dass** sie Mittel zum Erfassen der vertikalen Position des Lastaufnahmemittels (14) und zum Unterbinden der horizontalen Verfahrbarkeit der Verfahrenheit (12) umfasst, wenn sich das Lastaufnahmemittel (14) in vertikaler Richtung unterhalb eines bestimmten Bereichs befindet oder unter eine vorbestimmte Höhe oder einen vorbestimmten Bereich abgesenkt wird.

12. Sicherheitsanordnung (20) nach Anspruch 10 oder 11, **dadurch gekennzeichnet, dass** sie zumindest eine im Bereich des Bodens der jeweiligen Gasse (5) anzuordnende, opto-elektronische Sicherheitsvorrichtung (28) zur Überwachung einer zumindest annähernd horizontal verlaufenden Fläche oberhalb des Bodens aufweist.

13. Sicherheitsanordnung (20) nach einem der Ansprüche 10 bis 12, **dadurch gekennzeichnet, dass** sie zwei Laserscanner (22, 23) umfasst, welche an je einer Längsseite des Lastaufnahmemittels (14) angeordnet sind, wobei der jeweilige Laserscanner (22, 23) derart ausgebildet und angeordnet ist, dass damit eine zumindest annähernd parallel zur jeweiligen Regalreihe (3) verlaufende, sich im Wesentlichen in vertikaler Richtung erstreckende Fläche (24, 25) überwachbar ist.

14. Sicherheitsanordnung nach Anspruch 13, **dadurch gekennzeichnet, dass** der jeweilige Laserscanner (22, 23) mit zumindest je einer in einem Gehäuse angeordneten Sende- und Empfangseinheit versehen ist.

15. Sicherheitsanordnung nach Anspruch 12, **dadurch gekennzeichnet, dass** die jeweilige, im Bereich des Bodens einer Gasse (5) anzuordnende, opto-elektronische Sicherheitsvorrichtung (28) jeweils aus einer länglichen Sendeeinheit (29) und einer länglichen Empfangseinheit (30) besteht, wobei die Sendeinheit eine Vielzahl von parallel verlaufenden Lichtstrahlen (31) emittiert.

16. Verfahren zur Steuerung eines flurfrei arbeitenden Regalbediengeräts (10) einer Regallageranlage (1), welch letztere mit in Regalreihen (3c) angeordneten Regalfächern (2) und zwischen den Regalreihen (3c) verlaufenden Gassen (5) versehen ist, wobei das Regalbediengerät (10) mit einer Steuerungsvorrichtung (32) zur Steuerung der Bewegung verbunden ist und eine horizontal verfahrbare Verfahreinheit (12) und ein über Seile (16) oder Riemen damit verbundenes, vertikal verfahrbares Lastaufnahmemittel (14) aufweist, an dem eine opto-elektronische Sicherheitsvorrichtung (21) zur Überwachung eines Bereichs unterhalb und/oder seitlich des Lastaufnahmemittels (14) angebracht ist, und wobei sich die jeweilige Regalreihe (3a) in vertikaler Richtung über mehrere Ebenen (4a-4c) erstreckt und die jeweils unterste Ebene (4a) als Kommissionierebene ausgebildet ist, **dadurch gekennzeichnet, dass** die Steuerungsvorrichtung (32) das Regalbediengerät (10) derart steuert, dass die horizontale Verfahrbarkeit der Verfahreinheit (12) unterbunden wird, wenn sich das Lastaufnahmemittel (14) in vertikaler Richtung im Bereich der untersten Ebene (4a) befindet oder in den Bereich der untersten Ebene (4a) abgesenkt wird.

17. Verfahren nach Anspruch 16, **dadurch gekennzeichnet, dass** die vertikale Bewegung des Lastaufnahmemittels (14) verzögert wird, sobald ein Objekt in dem durch die opto-elektronische Sicherheitsvorrichtung (21) überwachten Bereich (24, 25) detektiert wird.

18. Verfahren nach Anspruch 17, **dadurch gekennzeichnet, dass** die vertikale Bewegung des Lastaufnahmemittels (14) bis zu dessen Stillstand verzögert wird, sobald ein Objekt in einem durch die opto-elektronische Sicherheitsvorrichtung (21) überwachten Bereich (24, 25) detektiert wird.

19. Verfahren nach Anspruch 17 oder 18, **dadurch gekennzeichnet, dass** das Mass der Verzögerung abhängig ist, von der Distanz zwischen dem detektierten Objekt und dem Lastaufnahmemittel (14).
